# EUROPÄISCHE PATENTSCHRIFT

(11) **EP 3 482 877 B1**
(45) Veröffentlichungstag und Bekanntmachung des Hinweises auf die Patenterteilung: **14.02.2024**
(21) Anmeldenummer: 18205182.1
(22) Anmeldetag: 08.11.2018
(51) Int. Cl.: B24C 1/06, B24C 9/00, B24C 3/06, B24C 3/32, B29C 65/00, B24C 1/00, B24C 5/04, B24C 7/00, B24C 11/00

(54) **VERFAHREN ZUR BEHANDLUNG EINER OBERFLÄCHE EINES FASERVERBUNDBAUTEILS**
METHOD FOR TREATING THE SURFACE OF A FIBRE COMPOSITE COMPONENT
PROCÉDÉ DE TRAITEMENT D'UNE SURFACE D'UN ÉLÉMENT COMPOSITE À FIBRE

(30) Priorität: 10.11.2017 DE 102017220032
(43) Veröffentlichungstag der Anmeldung: 15.05.2019
(73) Patentinhaber: Premium AEROTEC GmbH, 86179 Augsburg (DE)
(72) Erfinder: Gensewich, Christian, 26954 Nordenham (DE)
(74) Vertreter: LKGLOBAL Lorenz & Kopf Patentanwalt Attorney at Law PartG mbB

(56) Entgegenhaltungen:
- WO-A1-2004/067229
- WO-A1-2005/095057
- WO-A1-2017/081730
- WO-A2-2011/030924
- DE-A1- 19 802 308
- DE-A1-102005 045 470
- DE-A1-102015 220 969
- JP-A- H 106 221
- US-A- 4 395 850

## Beschreibung

Die vorliegende Erfindung betrifft ein Verfahren zur Behandlung einer Oberfläche eines Faserverbundbauteils nach dem Oberbegriff des Anspruchs 1.

Im Fahrzeugbau allgemein, insbesondere im Luftfahrzeugbau, kommen zunehmend Faserverbundbauteile, also aus Faserverbundwerkstoffen hergestellte Strukturbauteile zum Einsatz, da diese eine hohe mechanische Festigkeit bezogen auf deren Bauteilgewicht aufweisen. Insbesondere im Luftfahrzeugbau werden die Faserverbundbauteile häufig mit weiteren Bauteile verklebt. An eine solche Klebeverbindungen werden hohe Anforderungen bezüglich mechanischer Festigkeit gestellt. Um diese Anforderungen erfüllen zu können, ist üblicherweise eine Behandlung der Oberfläche des Faserverbundbauteils vor dem Verkleben nötig.

Neben einem Abschleifen der Oberfläche kommen üblicherweise abrasive Strahlverfahren zur Oberflächenbehandlung zum Einsatz.

Die WO 2004/067 229 A1 beschreibt ein Abtragen einer Oberflächenschicht durch Strahlen der Oberfläche mittels eines in einem gasförmigen Fluid verteilten Strahlmittel nach dem Oberbegriff des Anspruchs 1.

Gemäß der WO 2009 / 135 922 A1 erfolgt ebenfalls ein Oberflächenabtrag durch ein Strahlmittel, wobei das Strahlmittel eine geringere Härte aufweist, die Fasern des Faserverbundbauteils, um eine Beschädigung der Fasern zu verhindern.

Die US 4 563 840 A beschreibt ein Luftstrom-Reinigungsgerät, das mit einer Vorrichtung zum Aufprall von Reinigungspartikeln ausgestattet ist. Die Aufprallvorrichtung umfasst eine erste Düse und eine zweite Düse. Die erste Düse hat einen ersten Düsenkanal, der sich von einem ersten Einlassabschnitt zu einer ersten Aufprallöffnung erstreckt. Die zweite Düse hat einen zweiten Düsenkanal, der sich in Auftreffrichtung der ersten Düse von einem zweiten Einlassabschnitt, der die erste Auftrefföffnung umgibt, zu einer zweiten Auftrefföffnung erstreckt. Die zweite Düse weist ferner eine Auslassöffnung auf, die nicht mit der Aufprallrichtung der ersten Düse fluchtet.

Die US 4 395 850 A beschreibt eine Adaptervorrichtung zur Oberflächenbehandlung zur Verwendung in Kombination mit einer Abrasivvorrichtung. Die Adaptervorrichtung umfasst ein Adaptergehäuse, das eine hohle, becherförmige Kammer aufweist, eine Öffnung in dem Gehäuse zur Aufnahme der Auslassdüse einer Abrasivpistole, einen Auslass mit Mitteln zum lösbaren Anschließen einer Niederdruckleitung von der Abrasivvorrichtung, austauschbare hohle Arbeits-Werkzeugelemente und rohrförmige Verbindungselemente, die das Adaptergehäuse und ein ausgewähltes der Werkzeugelemente lösbar und einstellbar verbinden. Die Werkzeugelemente, die mit der zu behandelnden Oberfläche in Berührung kommen, sind jeweils unterschiedlich gestaltet, um Oberflächen mit unterschiedlicher Kontur aufzunehmen und einen dichtenden Eingriff mit ihnen herzustellen. Der Abrasivvorgang wird innerhalb der Grenzen des verwendeten Werkzeugelements durchgeführt. Das Abrasivmittel wird durch die Gehäuseöffnung eingeführt und trifft auf die vom Werkzeug eingeschlossene Oberfläche auf. Der abgetragene Stoff und der Staub, einschließlich des verbrauchten Abrasivmittels, werden dann durch die Kammer des Gehäuses und durch den Abluftauslass zur Abrasivvorrichtung gezogen und dort abgeschieden.

Die US 2011 / 104 991 A1 beschreibt Düsenkonfigurationen für ein Strahlsystem. Das System kann mehrere Trichter zur Zuführung getrennter Pulverströme zu einem Flüssigkeitsstrahl umfassen. Die einzelnen Pulverströme können in einem kegelstumpfförmigen oder konischen Mischer gemischt werden, bevor sie der Substratoberfläche zugeführt werden. Außerdem werden Verfahren zur Texturierung der Substratoberfläche durch Bewegen des Substrats oder der Düse(n) während der Zufuhr von Dotierstoff(en) offenbart. Es werden auch Verfahren zur Erzielung einer gleichmäßigen Verteilung von Dotierstoffen beschrieben. Außerdem werden koaxiale Düsenkonfigurationen beschrieben, bei denen ein äußerer fokussierender Strom mit einem inneren Partikelstrom konvergiert und/oder sich mit diesem vermischt.

Es ist Aufgabe der vorliegenden Erfindung, ein verbessertes Verfahren zur Behandlung einer Oberfläche eines Faserverbundbauteils zu schaffen.

Diese Aufgabe wird jeweils durch ein Verfahren mit den Merkmalen des Anspruchs 1 gelöst.

Nach einem ersten Aspekt der Erfindung ist ein Verfahren zur Behandlung einer Oberfläche eines Faserverbundbauteils vorgesehen. Gemäß diesem Verfahren erfolgt ein abrasives Abtragen der Oberfläche des Faserverbundbauteils durch Aufstrahlen eines durch ein gasförmiges Transportfluid transportiertes Abtragungsmittels auf die Oberfläche des Faserverbundbauteils mittels einer Zufuhrdüse und ein Absaugen des Abtragungsmittels sowie von durch das Abtragungsmittel abgetragenem Material mittels einer im Bereich der Zufuhrdüse angeordneten Absaugdüse.

Gemäß der vorliegenden Erfindung erfolgt also gleichzeitig mit einem Aufstrahlen eines Abtragungsgranulats ein Absaugen der durch das Granulat oder Abtragungsmittel abgetragenen Partikel des Faserverbundbauteils und des Granulats selbst aus dem Bereich, in dem Abgetragen wird. Dies bietet den Vorteil, dass eine Staubentwicklung gegenüber üblichen Strahlverfahren deutlich reduziert wird.

Der Transport des Abtragungsmittels erfolgt erfindungsgemäß in einem Transportfluid, das durch eine Zufuhrdüse an die zu behandelnde Oberfläche des Bauteils geleitet wird. Das Transportfluid wird dabei mit einem gewissen Druck beaufschlagt. Das Absaugen erfolgt durch eine Absaugdüse, deren Öffnung räumlich im Bereich der Zufuhrdüse angeordnet ist, und an deren Öffnung ein gewisser Unterdruck gegenüber einem Umgebungsdruck herrscht. Hierbei wird das durch die Zufuhrdüse zugeführte Transportfluid wieder abgesaugt und mit diesem die abgetragenen Materialpartikel und das Abtragungsmittel.

Gemäß der Erfindung erfolgt das Aufstrahlen durch die Zufuhrdüse in einem Arbeitsraum, der durch eine auf die Oberfläche des Faserverbundbauteils aufgesetzte Glocke gebildet ist, wobei das Abtragungsmittel und das abgetragenem Material mittels der Absaugdüse aus dem Arbeitsraum abgesaugt werden. Demnach erfolgt das Abtragen der Oberfläche unter einer Glocke oder Haube. Die Zufuhrdüse und die Absaugdüse ragen in den Abtragungsraum hinein und können insbesondere durch in einer Wandung der Glocke ausgebildete Ausnehmungen hindurchgeführt sein. Die Verwendung der Glocke reduziert weiter die Staubentwicklung während der Durchführung des Verfahrens.

Gemäß der Erfindung ist vorgesehen, dass die Glocke einen Anlagerand aufweist, welcher der Oberfläche des Faserverbundbauteils zugewandt ist, wobei an dem Anlagerand eine Dichtungseinrichtung zur Abdichtung des Arbeitsraums gegenüber der Oberfläche des Faserverbundbauteils angeordnet ist. Der Anlagerand bildet insbesondere eine Öffnung der Glocke aus. An diesem Rand ist eine Dichtungseinrichtung angeordnet, die zur Anlage an die Oberfläche des Faserverbundbauteils vorgesehen ist. Während des Abtragens wird die Glocke mit der Dichtungseinrichtung an die Oberfläche des Faserverbundbauteils angelegt. Die Dichtungseinrichtung kann beispielsweise in Form einer Bürstendichtung realisiert sein, welche durch eine Vielzahl von elastisch verformbaren Kunststoffhärchen gebildet ist, die von dem Anlagerand abstehen. Die Dichtungseinrichtung verbessert die Abdichtung des Arbeitsraums, insbesondere wenn die Glocke an gekrümmten oder unebenen Oberflächenbereichen anliegt.

Gemäß der Erfindung ist der Arbeitsraum beim Abtragen eines Randbereichs der Oberfläche des Faserverbundbauteils gegenüber einer Rückoberfläche des Faserverbundbauteils abgedichtet. Demnach ist vorgesehen, dass beim Abtragen eines ein sich entlang einer Kante des Faserverbundbauteils erstreckender Bereichs der Oberfläche eine Abdichtung des Arbeitsraums um diese Kante herum zu einer entgegengesetzt zu der bearbeiteten Oberfläche gelegenen Rückoberfläche hin erfolgt. Dies erfolgt durch eine Gestaltung der Dichtungseinrichtung, wobei diese die Kante des Faserverbundbauteils umschließt und dadurch an der bearbeiteten Oberfläche und der Rückseitenoberfläche anliegt. Auf diese Weise kann auch bei einer Bewegung des Anlagerands der Glocke über die Kante des Faserverbundbauteils hinaus eine Staubentwicklung verringert werden. Ferner wird durch die Abdichtung der Druck im Arbeitsraum bei einer Bewegung des Anlagerands der Glocke über die Kante des Faserverbundbauteils hinaus Druckschwankungen im Arbeitsraum vorgebeugt, sodass eine noch gleichmäßigere Abtragung der Oberfläche erfolgt.

Vorteilhafte Ausgestaltungen und Weiterbildungen ergeben sich aus den auf die unabhängigen Ansprüche rückbezogenen Unteransprüchen in Verbindung mit der Beschreibung.

Insbesondere ist der Druck in der Absaugdüse unabhängig vom Druck des Transportfluids in der Zufuhrdüse einstellbar. Auf diese Weise kann die Absaugleistung individuell an verschiedene Abtragungsleistungen angepasst werden.

Gemäß einer weiteren Ausführungsform ist vorgesehen, dass das Faserverbundbauteil sich in einer Längsrichtung erstreckt, wobei das Abtragen streifenweise entlang der Längsrichtung ausgehend von einer Seitenkante des Faserverbundbauteils erfolgt. Die Zufuhr und die Absaugdüse und das Faserverbundbauteil werden hierbei also entlang der Längsrichtung des Faserverbundbauteils relativ zueinander bewegt. Die Düsen fahren also einen Streifen der Oberfläche des Faserverbundbauteils ab und tragen die Oberfläche in diesem Streifen ab. Anschließend erfolgt ein seitliches Versetzten des Faserverbundbauteils und der Düsen quer zu der Längsrichtung und ein erneutes Bewegen der Düsen und des Bauteils entlang der Längsrichtung des Faserverbundbauteils relativ zueinander. Dadurch wird ein weiterer Streifen der Oberfläche des Faserverbundbauteils abgetragen. Auf diese Weise wird eine zur Abtragung eines bestimmten Flächeninhalts der Oberfläche notwendige Anzahl von Richtungswechseln vorteilhaft verringert.

Gemäß einer Ausführungsform des Verfahrens ist vorgesehen, dass die Absaugdüse die Zufuhrdüse ringförmig umgibt. Insbesondere können eine Öffnung der Zufuhrdüse und eine Öffnung der Absaugdüse konzentrisch angeordnet sein. Diese Gestaltung der Düsen ist sehr platzsparend, wodurch auch kleine Bauteile präzise bearbeitet werden können.

Nach einer alternativen Ausführungsform ist die Zufuhrdüse unter einem ersten Winkel relativ zu der Oberfläche des Faserverbundbauteils angeordnet. Insbesondere schließt hierbei eine Mittelachse eines Endabschnitts der Zufuhrdüse einen ersten Winkel mit der Oberfläche des Faserverbundbauteils ein. Dieser Winkel kann insbesondere zwischen 30 Grad und 90 Grad, vorzugweise zwischen 45 Grad und 80 Grad liegen. Eine gewinkelte Ausrichtung der Zufuhrdüse relativ zu der Oberfläche bietet den Vorteil, dass das Abtragungsmittel unter in etwa diesem Winkel auf die Oberfläche trifft, was den Abtransport des Abtragungsmittels und des abgetragenen Materials erleichtert.

Insbesondere kann vorgesehen sein, dass die Absaugdüse unter einem zweiten Winkel relativ zu der Oberfläche des Faserverbundbauteils und gegenüberliegend zu der Zufuhrdüse angeordnet ist. Insbesondere schließt hierbei eine Mittelachse eines Endabschnitts der Absaugdüse einen zweiten Winkel mit der Oberfläche des Faserverbundbauteils ein. Dieser Winkel kann insbesondere zwischen 30 Grad und 85 Grad, vorzugweise zwischen 45 Grad und 75 Grad liegen. Ferner ist insbesondere eine Öffnung der Absaugdüse der Zufuhrdüse zugewandt gelegen. Auch kann vorgesehen sein, dass die Mittelachse des Endabschnitts der Absaugdüse und die Mittelachse des Endabschnitts der Zufuhrdüse eine Ebene ausbilden, die vorzugsweise senkrecht auf die Oberfläche des Faserverbundbauteils steht. Durch die gegenüberliegende Anordnung der Düsen wird der Materialabtransport von der Oberfläche weiter verbessert.

Nach einer weiteren Ausführungsform wird das Transportfluid mit einem Druck zwischen 0,25 bar und 8 bar, optional zwischen 1 bar und 5 bar über Umgebungsdruck zu der Oberfläche transportiert. In diesem Druckbereich ergeben sich für eine Vielzahl von Abtragungsmitteln gute Abtragungsergebnisse.

Gemäß einer weiteren Ausführungsform werden als Abtragungsmittel Glasgranulat Korundgranulat oder Kunststoffgranulat verwendet. Allgemein wird als Abtragungsmittel ein Partikelgranulat verwendet. Die Partikel können als perlenförmiges Granulat, also mit einer runden Kornform, oder als Bruch, also mit einer kantigen Kornform, vorliegen. Das Glasgranulat kann beispielsweise aus Alkali-Kalk-Glas hergestellt sein. Das Korundgranulat kann beispielsweise durch Schmelzen von Tonerde mittels eines Lichtbogens hergestellt sein und weißt beispielsweise zu mehr als 99 Gewichtsprozent Al₂O₃ auf. Generell können die Partikel insbesondere eine Größe zwischen 3 µm und 2000 µm, insbesondere zwischen 5 µm und 500 µm, vorzugsweise zwischen 10 µm und 200 µm. Beispielsweise werden mit Glasperlen zwischen 100 µm und 200 µm, die mit einem Transportfluid bei etwa 3 bar auf ein Faserverbundmaterial, das mit Epoxidharz als Matrixmaterial gebildet ist, aufgestrahlt werden, sehr gut mit Flüssigkeit benetzbare Oberflächen durch die Abtragung ausgebildet.

Gemäß einer weiteren Ausführungsform ist das Faserverbundbauteil durch ein Strukturbauteil eines Luftfahrzeugs, insbesondere durch einen Stringer, gebildet.

Hierin wird unter einem "Faserverbundbauteil" oder einem "faserverstärkten Bauteil" allgemein ein Bauteil verstanden, welches einen Faserwerkstoff aufweist, der aus einer Vielzahl von insbesondere fadenförmigen oder fadenstückförmigen Verstärkungsfasern, wie beispielsweise Kohle-, Glas-, Keramik-, Aramid-, Bor-, Mineral-, Natur- oder Kunststofffasern oder Mischungen aus diesen gebildet ist, wobei der der Faserwerkstoff in ein Harz- oder Matrixmaterial, wie z.B. einem duroplastischen, thermoplastischen, elastomeren Harz oder allgemein einem Kunststoffharz oder dergleichen, eingebettet ist.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "entlang" einer anderen Achse, Richtung oder Struktur verstanden, dass diese, insbesondere die sich in einer jeweiligen Stelle der Strukturen ergebenden Tangenten jeweils in einem Winkel von kleiner gleich 45 Grad, bevorzugt kleiner 30 Grad und insbesondere bevorzugt parallel zueinander verlaufen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "quer" zu einer anderen Achse, Richtung oder Struktur verstanden, dass diese, insbesondere die sich in einer jeweiligen Stelle der Strukturen ergebenden Tangenten jeweils in einem Winkel von größer oder gleich 45 Grad, bevorzugt größer oder gleich 60 Grad und insbesondere bevorzugt senkrecht zueinander verlaufen.

Im Folgenden wird die Erfindung unter Bezugnahme auf die Figuren der Zeichnungen erläutert. Von den Figuren zeigen:
- Fig. 1: eine schematische Perspektivansicht eines Faserverbundbauteils in Form eines Strukturbauteils eines Luftfahrzeugs;
- Fig. 2: eine schematische Schnittansicht eines Faserverbundbauteils in Form eines Strukturbauteils eines Luftfahrzeugs der mit einer Außenhaut eines Luftfahrzeugs verklebt ist;
- Fig. 3: eine schematische Schnittansicht eines weiteren Faserverbundbauteils in Form eines Stringers eines Luftfahrzeugs der mit einer Außenhaut eines Luftfahrzeugs verklebt ist;
- Fig. 4: eine Draufsicht auf eine Oberfläche eines Faserverbundbauteils während der Durchführung eines Verfahrens gemäß einem Ausführungsbeispiel der vorliegenden Erfindung;
- Fig. 5: eine Schnittansicht eines Faserverbundbauteils während der Durchführung eines Verfahrens gemäß einem weiteren Ausführungsbeispiel der vorliegenden Erfindung;
- Fig. 6: eine schematische Detailansicht des in Fig. 5 durch den Buchstaben X gekennzeichneten Bereichs;
- Fig. 7: eine Schnittansicht eines Faserverbundbauteils während der Durchführung eines Verfahrens gemäß einem weiteren Ausführungsbeispiel der vorliegenden Erfindung;
- Fig. 8: eine Schnittansicht eines Faserverbundbauteils während der Durchführung eines Verfahrens gemäß der vorliegenden Erfindung;
- Fig. 9: eine schematische Ansicht eines abrasiven Abtragens einer Oberfläche eines Faserverbundbauteils gemäß einem weiteren Ausführungsbeispiels des Verfahrens gemäß der vorliegenden Erfindung;
- Fig. 10: eine schematische Draufsicht auf eine Zufuhrdüse zur Durchführung des in Fig. 9 dargestellten Abtragens;
- Fig. 11: eine schematische Ansicht eines abrasiven Abtragens einer Oberfläche eines Faserverbundbauteils gemäß einem weiteren Ausführungsbeispiels des Verfahrens gemäß der vorliegenden Erfindung; und
- Fig. 12: eine schematische Draufsicht auf eine Zufuhrdüse zur Durchführung des in Fig. 10 dargestellten Abtragens.

In den Figuren bezeichnen dieselben Bezugszeichen gleiche oder funktionsgleiche Komponenten, soweit nichts Gegenteiliges angegeben ist.

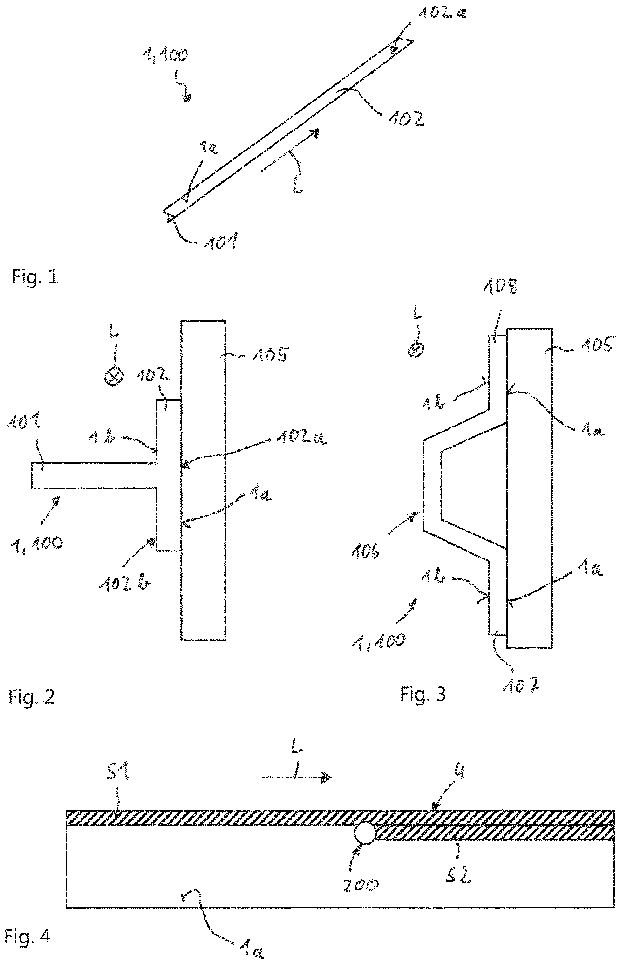

Fig. 1 zeigt eine schematische Perspektivansicht eines Faserverbundbauteils 1 in Form eines Strukturbauteils 100 eines Luftfahrzeugs (nicht dargestellt). Das Strukturbauteil 100 kann insbesondere als Stringer, also als ein sich in einer Rumpflängsrichtung erstreckenden Träger, verwendet werden. Das in Fig. 1 beispielhaft gezeigte Faserverbundbauteil 1 ist als ein sich in einer Längsrichtung L erstreckender Profilträger mit T-förmigem Querschnitt ausgebildet, wobei der T-förmige Querschnitt durch einen Längssteg 101 und einen sich quer zu diesem erstreckenden Quersteg 102 ausgebildet ist. Eine zur Verklebung mit einem weiteren Bauteil 105 vorgesehene Oberfläche 1a des Faserverbundbauteils 1 kann insbesondere durch eine erste Oberfläche 102a des Querstegs 102 gebildet sein. Der Längssteg 101 erstreckt sich von einer entgegengesetzt zu der ersten Oberfläche 102a gelegenen zweiten Oberfläche 102b des Querstegs 102 aus.

Wie in Fig. 2 schematisch in einer Schnittansicht dargestellt, kann die durch die erste Oberfläche 102a des Querstegs 102 gebildete Oberfläche 1a des Faserverbundbauteils 1 mit einem weiteren Bauteil 105, z.B. einer Außenhaut des Luftfahrzeugs, verklebt sein.

Fig. 3 zeigt beispielhaft eine schematische Schnittansicht eines mit einem weiteren Bauteil 105 verklebten Faserverbundbauteil 1 in Form eines Strukturbauteils 100. Im Unterschied zu dem in Fig. 2 gezeigten Strukturbauteil 100 weist das in Fig. 3 gezeigte Strukturbauteil 100 einen Ω-förmigen Querschnitt auf, der durch ein Mittelprofil 106 mit einer in etwa C-förmigen Querschnittsform, und durch zwei Seitenstege 107, 108 gebildet ist, die von dem Mittelprofil 106 an gegenüberliegenden Seiten abstehen. Wie in Fig. 3 erkennbar, kann die zur Verklebung mit dem weiteren Bauteil 105 vorgesehene Oberfläche 1a des Faserverbundbauteils 1 insbesondere an den Seitenstegen 107, 108 vorgesehen sein.

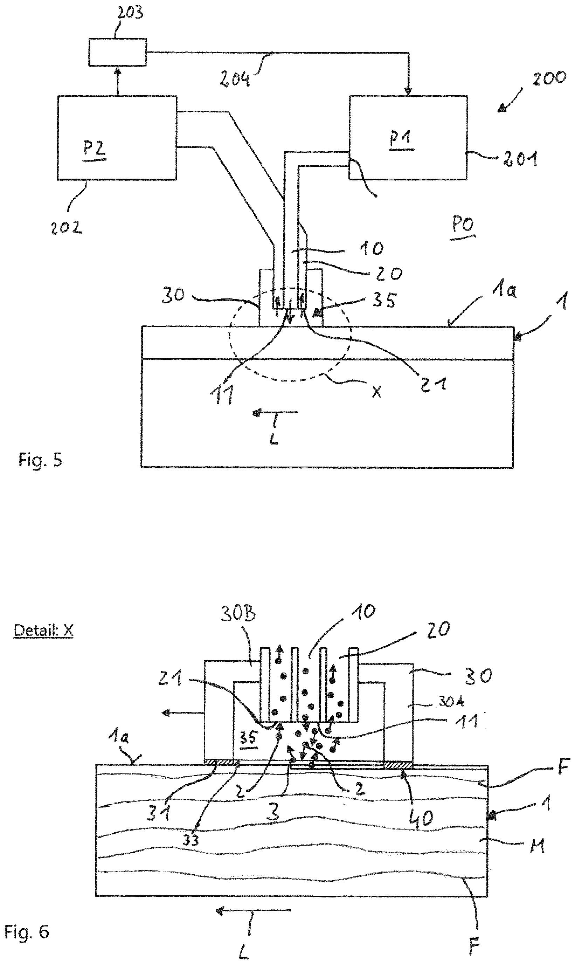

Die zur Verklebung vorgesehene Oberfläche 1a des Faserverbundbauteils 1 wird im Folgenden auch als Klebefläche 1a bezeichnet und muss vor dem Verkleben mit dem Bauteil 105 behandelt werden, insbesondere zur Verringerung der Oberflächenrauhigkeit. Das Faserverbundbauteil weist einen Faserwerkstoff auf, der aus einer Vielzahl von insbesondere fadenförmigen oder fadenstückförmigen Verstärkungsfasern F, wie beispielsweise Kohle-, Glas-, Keramik-, Aramid-, Bor-, Mineral-, Natur- oder Kunststofffasern oder Mischungen aus diesen gebildet ist, wobei der der Faserwerkstoff in ein Harz- oder Matrixmaterial M, wie z.B. einem duroplastischen, thermoplastischen, elastomeren Harz oder allgemein einem Kunststoffharz oder dergleichen, eingebettet ist. Dieser Aufbau ist in Fig. 6 erkennbar, welche ein schematische Schnittansicht des Faserverbundbauteils 1 im Bereich der Klebefläche 1a zeigt.

Zur Behandlung einer Oberfläche 1a des Faserverbundbauteils 1 erfolgt ein abrasives Abtragen der Oberfläche 1a durch Aufstrahlen Abtragungsmittels 2 auf die Oberfläche 1a.

Wie in Fig. 4 zeigt schematisch ein Abtragen der Klebefläche 1a als Draufsicht auf die Klebefläche 1a. Wie in Fig. 4 schematisch gezeigt ist, kann das Abtragen insbesondere streifenweise entlang der Längsrichtung L ausgehend von einer Seitenkante 4 des Faserverbundbauteils 1 erfolgen. Hierzu werden das Faserverbundbauteil 1 und eine in Fig. 4 symbolisch als Kreis dargestellte Bearbeitungsvorrichtung 200 relativ zueinander in der Längsrichtung L bewegt. Wie in Fig. 4 gezeigt, kann beispielsweise zunächst ein erster Streifen S1 über die gesamte Längserstreckung der Oberfläche 1a durch eine Relativbewegung der Bearbeitungsvorrichtung 200 und des Faserverbundbauteils 1 relativ zueinander entgegen der Längsrichtung L abgetragen werden, wobei der erste Streifen S1 sich an die Seitenkante 4 des Faserverbundbauteils 1 anschließt. Anschließend werden das Faserverbundbauteil 1 und die Bearbeitungsvorrichtung 200 quer zu der Längsrichtung L relativ zueinander verschoben, sodass die Bearbeitungsvorrichtung 200 neben dem ersten Streifen S1 angeordnet ist. Danach erfolgt eine Relativbewegung der Bearbeitungsvorrichtung 200 und des Faserverbundbauteils 1 in der Längsrichtung L, wodurch ein sich an den ersten Streifen S1 anschließender zweiter Streifen S2 abgetragen wird, wie dies in Fig. 4 beispielhaft gezeigt ist.

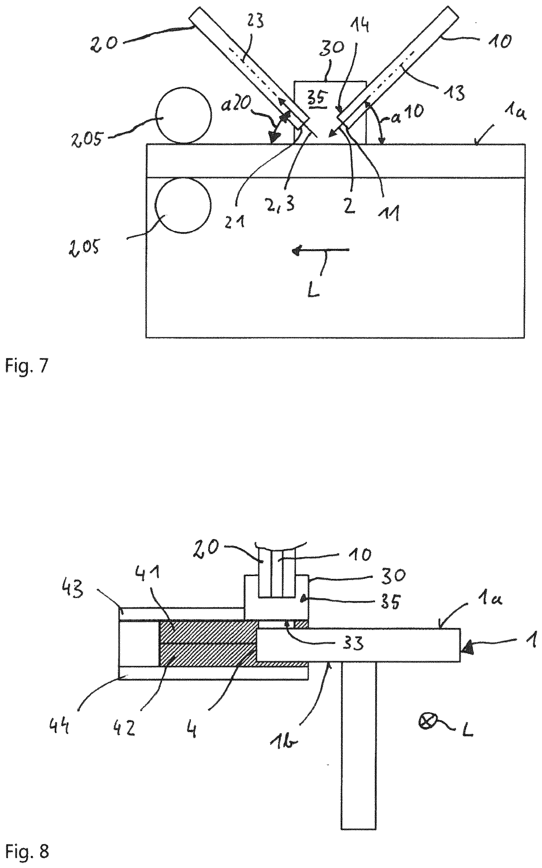

Das Bewegen der Bearbeitungsvorrichtung 200 und des Faserverbundbauteils 1 relativ zueinander kann beispielsweise durch ein Transportieren des Faserverbundbauteils 1 mittels Transportrollen 205 erfolgen, wie dies beispielhaft in Fig. 7 dargestellt ist. Alternativ oder zusätzlich kann die Bearbeitungsvorrichtung 200, insbesondere eine Zufuhrdüse 10 und eine Absaugdüse 20 der Bearbeitungsvorrichtung 200 mittels eines Manipulators (nicht dargestellt) einer Bewegungseinrichtung bewegbar sein.

Wie in Fig. 5 bis 8 jeweils schematisch dargestellt ist, weist die Bearbeitungsvorrichtung 200 eine Zufuhrdüse 10, eine Absaugdüse 20 und eine optionale Glocke 30 auf.

Das Abtragen der Klebefläche 1a erfolgt durch Aufstrahlen eines durch ein gasförmiges Transportfluid transportiertes Abtragungsmittels 2 auf die Oberfläche 1a des Faserverbundbauteils 1 durch die Zufuhrdüse 10. Dies ist in den Fig.5 und 7 jeweils schematisch gezeigt. Fig. 6 zeigt eine Detailansicht, in welcher die Vorgänge schematisch im Detail dargestellt sind.

Der Zufuhrdüse 10 wird über eine Zufuhreinrichtung 201 ein unter Druck P1 stehendes Transportfluid sowie ein granulat- oder partikelförmiges Abtragungsmittel 2 zugeführt, wobei das Abtragungsmittel 2 in der Strömung des Transportfluids mitgerissen wird. Über eine Austrittsöffnung 11 der Zufuhrdüse 10 wird die Strömung aus Transportfluid und Abtragungsmittel 2 auf die Klebefläche 1a gerichtet. Das Abtragungsmittel 2 trifft auf die Klebefläche 1a auf und trägt dort Material 3, insbesondere Matrixmaterial M, ab. Das Transportfluid kann beispielsweise mit einem Druck P1 zwischen 1 bar und 5 bar über Umgebungsdruck P0 zu der Oberfläche 1a transportiert werden. Als Abtragungsmittel 2 können beispielsweise Glasperlen, Korundgranulat oder Kunststoffgranulat verwendet werden.

Gleichzeitig mit dem Abtragen erfolgt ein Absaugen des Abtragungsmittels 2 und des abgetragenen Materials 3 mittels der Absaugdüse 30. Hierzu ist eine Absaugöffnung 21 der Absaugdüse 20 ein Unterdruck P2 erzeugt und damit das Transportfluid eingesaugt und das Abtragungsmittel 2 sowie das abgetragene Material 3 von der Klebefläche 1a entfernt und abtransportiert. Zum Erzeugen des Unterdrucks P2 an der Absaugöffnung 21 ist die Absaugdüse 20 an eine Saugeinrichtung 202, beispielsweise in Form einer Vakuumpumpe, angeschlossen.

Wie in Fig. 5 beispielhaft gezeigt ist, kann die Saugeinrichtung 202 mit einer optionalen Trennungseinrichtung 203 gekoppelt sein, in welcher das abgetragene Material 3 von dem Abtragungsmittel 2 getrennt wird. Die Trennungseinrichtung 203 kann beispielsweise einen Zentrifuge (nicht gezeigt) oder ähnliches aufweisen. Optional wird das Abtragungsmittel 2 über eine Rückführleitung 204 von der Trennungseinrichtung 203 wieder der Zufuhreinrichtung 201 zugeführt.

Die Absaugdüse 20 ist im Bereich der Zufuhrdüse 10 angeordnet, insbesondere ist die Absaugöffnung 21 der Absaugdüse 20 im Bereich der Austrittsöffnung 11 der Zufuhrdüse 10 angeordnet. Beispielsweise kann vorgesehen sein, dass die Absaugdüse 20 die Zufuhrdüse 10 ringförmig umgibt, wie dies schematisch in den Fig. 5 und 6 dargestellt ist. Hierbei kann das Abtragungsmittel 2 insbesondere senkrecht auf die Oberfläche 1a aufgestrahlt werden.

Alternativ hierzu ist die Zufuhrdüse 10 unter einem ersten Winkel a10 relativ zu der Oberfläche 1a des Faserverbundbauteils 1 angeordnet. Dies ist beispielhaft in Fig. 7 dargestellt, wobei in Fig. 7 im Unterschied zur Fig. 5 die Zufuhreinrichtung 201, die Saugeinrichtung 202 und die Trennungseinrichtung 203 aus Gründen der Übersichtlichkeit nicht dargestellt sind. Insbesondere schließt hierbei eine Mittelachse 13 eines Endabschnitts 14 der Zufuhrdüse 10, der die Austrittsöffnung 11 der Zufuhrdüse 10 aufweist, einen ersten Winkel a10 mit der Oberfläche 1a des Faserverbundbauteils 1 ein. Dieser Winkel a10 kann insbesondere zwischen 30 Grad und 85 Grad, vorzugweise zwischen 45 Grad und 75 Grad liegen. Wie in Fig. 7 weiterhin gezeigt ist, kann auch die Absaugdüse 20 unter einem zweiten Winkel a20 relativ zu der Oberfläche 1a des Faserverbundbauteils 1 angeordnet sein. Wie in Fig. 7 schematisch dargestellt, schließt hierbei eine Mittelachse 23 eines Endabschnitts 24 der Absaugdüse 20, der die Absaugöffnung 21 aufweist, einen zweiten Winkel a20 mit der Oberfläche 1a des Faserverbundbauteils 1 ein. Dieser Winkel a20 kann insbesondere zwischen 30 Grad und 85 Grad, vorzugweise zwischen 45 Grad und 75 Grad liegen. Wie in Fig. 7 außerdem gezeigt ist, ist die Absaugdüse 20 optional gegenüberliegend der Zufuhrdüse 10 angeordnet. Insbesondere sind hierbei die Absaugöffnung 21 und die Austrittsöffnung 11 einander zugewandt bzw. die Mittelachsen 13, 23 der Endabschnitte 14, 24 der Düsen 10, 20 schließen einen Winkel zwischen 10 Grad und 120 Grad ein. Die Mittelachsen 13, 23 der Endabschnitte 14, 24 der Düsen 10, 20 können insbesondere in einer Ebene gelegen sein.

Wie in den Fig. 5 bis 8 weiterhin gezeigt ist, kann das Aufstrahlen des Abtragungsmittels 2 durch die Zufuhrdüse 10 in einen durch die optionale Glocke 30 gebildeten Arbeitsraum 35 erfolgen. Wie insbesondere in Fig. 6 erkennbar, weist die Glocke 30 eine umlaufende Seitenwandung 30A auf, die eine Öffnung 33 definiert. Diese ist von einem Anlagerand 31 umgeben. Entgegengesetzt zu dem Anlagerand 31 ist eine Deckenwandung 30B vorgesehen. Die Glocke 30 wird während des Aufstrahlens des Abtragungsmittels 2 derart auf die Oberfläche 1a des Faserverbundbauteils 1 aufgesetzt, dass der Anlagerand 31 der Oberfläche 1a zugewandt ist. Dadurch wird ein geschlossener Arbeitsraum 35 gebildet, in welchen die Zufuhrdüse 10 und die Absaugdüse 20 hineinragen. Das Abtragungsmittel 2 wird somit in den Arbeitsraum 35 eingedüst und das abgetragenem Material 3 sowie das Abtragungsmittel 2 mittels der Absaugdüse 20 aus dem Arbeitsraum 35 abgesaugt.

Wie in Fig. 6 weiterhin beispielhaft gezeigt ist, kann an dem Anlagerand 31 der Glocke 30 eine Dichtungseinrichtung 40 zur Abdichtung des Arbeitsraums 35 vorgesehen sein. Beispielsweise kann die Dichtungseinrichtung 40 wie in Fig. 6 gezeigt als auf den Anlagerand 31 aufgesetzte, die Öffnung 33 umlaufende Dichtung ausgeführt sein, welche durch eine Vielzahl von Kunststoffhärchen gebildet ist. Dadurch erfolgt eine bezüglich dem Abtragungsmittel 2 und dem abgetragenen Material 3 dichte Abdichtung des Arbeitsraums 35.

Fig. 8 zeigt eine weitere mögliche Gestaltung der Dichtungseinrichtung 40. Die Dichtungseinrichtung 40 weist hierbei eine erste Dichtungsmatte 41 und eine zweite Dichtungsmatte 42 auf. Die erste Dichtungsmatte 41 umgibt die Öffnung 33 der Glocke 30 und steht über oder von dem Anlagerand 31 vor. Die erste und die zweite Dichtungsmatte 41, 42 sind einander gegenüberliegend angeordnet und erstrecken sich seitlich über die Seitenwandung 30A der Glocke 30 hinaus. Beispielsweise kann die erste Dichtungsmatte 41 durch eine erste Halteplatte 43 und die zweite Dichtungsmatte 41 durch an ein zweite Halteplatte 44 gehalten sein. Die Dichtungsmatten 41, 42 sind insbesondere durch ein elastisch verformbares Material, beispielsweise ein Kunststoffmaterial, z.B. einen Schaumstoff oder durch eine Vielzahl von Kunststoffhärchen ausgebildet.

Während des Abtragens kann die Dichtungseinrichtung 40 wie in Fig. 8 beispielhaft gezeigt über eine Seitenkante 4 des Faserverbundbauteils 1 geschoben werden, wobei die Klebeoberfläche 1a an der erste Dichtungsmatte 41 und die entgegengesetzt zu der Klebeoberfläche 1a gelegene Rückoberfläche 1b des Faserverbundbauteils 1 an die zweite Dichtungsmatte 42 angelegt wird. Die Dichtungsmatten 41, 42 liegen in Fig. 8 seitlich der Seitenkante 4 des Faserverbundbauteils 1 aneinander an. Auf diese Weise ist erfindungsgemäß ein Randbereich 1A der Oberfläche 1a des Faserverbundbauteils 1 gegenüber einer Rückoberfläche 1b des Faserverbundbauteils 1 abgedichtet werden.

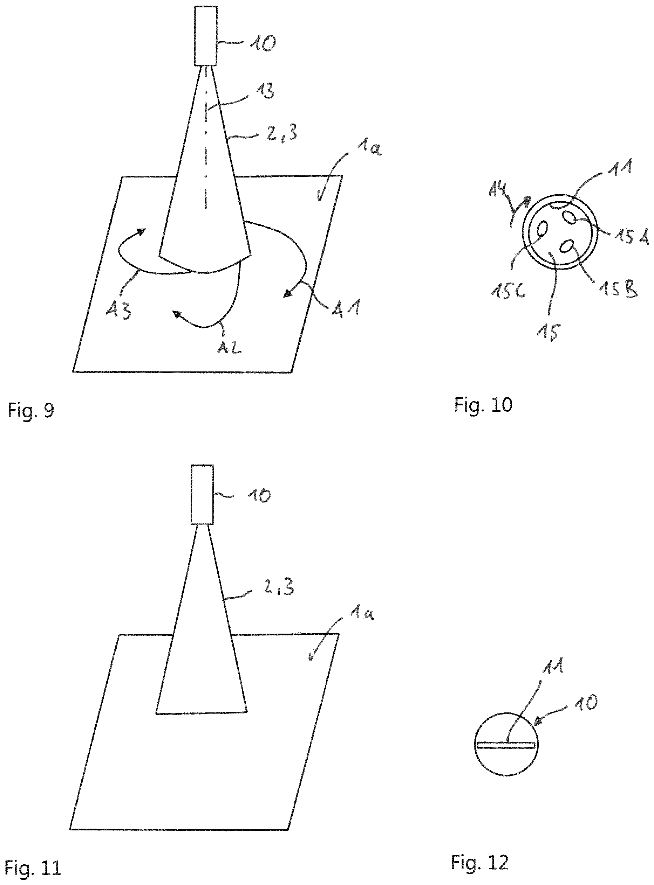

Wie in Fig. 9 beispielhaft und schematisch gezeigt ist, kann das Aufstrahlen des Abtragungsmittels 2 auf die Oberfläche 1a des Faserverbundbauteils durch die Zufuhrdüse 10 in einem Wirbelstrahl erfolgen. Dies bedeutet, dass das Abtragungsmittel 2 und das Transportfluid 3 als eine um die Mittelachse 13 des Endabschnitts 14 der Zufuhrdüse 10 verdrallte Strömung aus der Zufuhrdüse 10 austreten. In Fig. 9 ist dies symbolisch durch die Pfeile A1, A2 und A3 angedeutet. Diese Art des Aufstrahlens verbessert die Abtragungswirkung.

Eine solche rotierende Strömung kann beispielsweise mittels einer in die Austrittsöffnung 11 der Zufuhrdüse 10 eingesetzten Blende 15 erzeugt werden. Eine solche Blende 15 ist in Fig. 10 beispielhaft gezeigt. Die Blende 15 kann eine oder mehrere Öffnungen 15A, 15B, 15C aufweisen und ist in der Austrittsöffnung 11 um die Mittelachse 13 rotierbar gelagert, wie dies in Fig. 10 durch Pfeil A4 angedeutet ist.

Alternativ hierzu kann auch vorgesehen sein, dass das Aufstrahlen des Abtragungsmittels 2 auf die Oberfläche 1a des Faserverbundbauteils durch die Zufuhrdüse 10 in einem Flachstrahl erfolgt, wie dies in Fig. 11 schematisch und beispielhaft dargestellt ist. Ein solcher Strahl kann beispielsweise durch eine schlitzförmige Gestaltung der Austrittsöffnung 11 der Zufuhrdüse 10, siehe Fig. 12, oder durch Einsetzten einer Blende mit schlitzförmiger Öffnung in die Austrittsöffnung 11 der Zufuhrdüse 10 erzeugt werden.

### BEZUGSZEICHENLISTE

- 1: Faserverbundbauteil
- 1a: Oberfläche des Faserverbundbauteils
- 2: Abtragungsmittel
- 3: Material
- 4: Seitenkante des Faserverbundbauteils
- 10: Zufuhrdüse
- 11: Austrittsöffnung der Zufuhrdüse
- 13: Mittelachse eines Endabschnitts der Zufuhrdüse
- 14: Endabschnitt der Zufuhrdüse
- 15: Blende
- 15A-15C: Öffnungen der Blende
- 20: Absaugdüse
- 21: Absaugöffnung der Absaugdüse
- 23: Mittelachse eines Endabschnitts der Absaugdüse
- 24: Endabschnitt der Absaugdüse
- 30: Glocke
- 30A: Seitenwandung der Glocke
- 30B: Deckenwandung der Glocke
- 31: Anlagerand
- 33: Öffnung
- 35: Arbeitsraum
- 40: Dichtungseinrichtung
- 41: erste Dichtungsmatte
- 42: zweite Dichtungsmatte
- 43: erste Halteplatte
- 44: zweite Halteplatte
- 100: Strukturbauteil
- 101: Längssteg
- 102: Quersteg
- 105: weiteres Bauteil
- 106: Seitenstege
- 107, 108: Seitenstege
- 200: Bearbeitungsvorrichtung
- 201: Zufuhreinrichtung
- 202: Saugeinrichtung
- 203: Trennungseinrichtung
- 204: Rückführleitung
- 205: Transportrollen
- A1-A4: Pfeile
- a10: erster Winkel
- a20: zweiter Winkel
- F: Verstärkungsfasern
- L: Längsrichtung
- M: Matrixmaterial
- P0: Umgebungsdruck
- P1: Druck des Transportfluids
- S1: erster Streifen
- S2: zweiter Streifen

## Patentansprüche

1. Verfahren zur Behandlung einer Oberfläche (1a) eines Faserverbundbauteils (1) mit folgenden Schritten:
abrasives Abtragen der Oberfläche (1a) des Faserverbundbauteils (1) durch Aufstrahlen eines durch ein gasförmiges Transportfluid transportiertes Abtragungsmittels (2) auf die Oberfläche (1a) des Faserverbundbauteils (1) mittels einer Zufuhrdüse (10), **dadurch gekennzeichnet, dass** das Aufstrahlen durch die Zufuhrdüse (10) in einem Arbeitsraum (35) erfolgt, der durch eine auf die Oberfläche (1a) des Faserverbundbauteils (1) aufgesetzte Glocke (30) gebildet ist, wobei die Glocke (30) einen Anlagerand (31) aufweist, welcher der Oberfläche (1a) des Faserverbundbauteils (1) zugewandt ist, wobei an dem Anlagerand (31) eine Dichtungseinrichtung (40) zur Abdichtung des Arbeitsraums (35) gegenüber der Oberfläche (1a) des Faserverbundbauteils (1) angeordnet ist, und wobei der Arbeitsraum (35) beim Abtragen eines Randbereichs (1A) der Oberfläche (1a) des Faserverbundbauteils (1) gegenüber einer Rückoberfläche (1b) des Faserverbundbauteils (1) abgedichtet ist; und dass
Absaugen des Abtragungsmittels (2) und von durch das Abtragungsmittel (2) abgetragenem Material (3) aus dem Arbeitsraum (35) mittels einer im Bereich der Zufuhrdüse (10) angeordneten Absaugdüse (20);
wobei sich der Randbereich (1A) der Oberfläche (1a) entlang einer Kante (4) des Faserverbundbauteils (1) erstreckt, und wobei die Dichtungseinrichtung (40) die Kante (4) des Faserverbundbauteils (1) umschließt und dadurch an der Oberfläche (1a) und der Rückoberfläche (1b) des Faserverbundbauteils (1) anliegt.

2. Verfahren nach Anspruch 1, wobei das Faserverbundbauteil (1) sich in einer Längsrichtung (L) erstreckt, wobei das Abtragen streifenweise entlang der Längsrichtung (L) ausgehend von einer Seitenkante (4) des Faserverbundbauteils (1) erfolgt.

3. Verfahren nach einem der voranstehenden Ansprüche, wobei die Absaugdüse (20) die Zufuhrdüse (10) ringförmig umgibt.

4. Verfahren nach Anspruch 1 oder 2, wobei die Zufuhrdüse (10) unter einem ersten Winkel (a10) relativ zu der Oberfläche (1a) des Faserverbundbauteils (1) angeordnet ist.

5. Verfahren nach Anspruch 4, wobei die Absaugdüse (20) unter einem zweiten Winkel (a20) relativ zu der Oberfläche (1a) des Faserverbundbauteils (1) und gegenüberliegend zu der Zufuhrdüse (10) angeordnet ist.

6. Verfahren nach einem der voranstehenden Ansprüche, wobei das Transportfluid mit einem Druck (P1) zwischen 0,25 bar und 8 bar über Umgebungsdruck (P0) zu der Oberfläche (1a) transportiert wird.

7. Verfahren nach einem der voranstehenden Ansprüche, wobei als Abtragungsmittel (2) Glasgranulat, Korundgranulat oder Kunststoffgranulat verwendet wird.

8. Verfahren nach einem der voranstehenden Ansprüche, wobei das Faserverbundbauteil (1) durch ein Strukturbauteil (100) eines Luftfahrzeugs, insbesondere durch einen Stringer, gebildet ist.

## Claims

1. Method for treating a surface (1a) of a fibre composite component (1), comprising the following steps:
Abrasive removal of the surface (1a) of the fibre composite component (1) by blasting an abrasive agent (2) transported by a gaseous transport fluid onto the surface (1a) of the fibre composite component (1) by means of a feed nozzle (10), **characterised in that**
the blasting by the feed nozzle (10) takes place in a working space (35) which is formed by a bell (30) placed on the surface (1a) of the fibre composite component (1), the bell (30) having an abutment rim (31) which faces the surface (1a) of the fibre composite component (1), wherein a sealing device (40) for sealing the working space (35) with respect to the surface (1a) of the fibre composite component (1) is arranged at the abutment rim (31), and wherein the working space (35) is sealed with respect to a rear surface (1b) of the fibre composite component (1) when a rim region (1A) of the surface (1a) of the fibre composite component (1) is removed; and that
a suction of the removal agent (2) and of material (3) removed by the removal agent (2) from the working space (35) is carried out by means of a suction nozzle (20) arranged in the region of the feed nozzle (10);
wherein the rim region (1A) of the surface (1a) extends along an edge (4) of the fibre composite component (1), and wherein the sealing device (40) encloses the edge (4) of the fibre composite component (1) and thereby abuts against the surface (1a) and the rear surface (1b) of the fibre composite component (1).

2. Method according to claim 1, wherein the fibre composite component (1) extends in a longitudinal direction (L), wherein the removal takes place in strips along the longitudinal direction (L) starting from a side edge (4) of the fibre composite component (1).

3. Method according to one of the preceding claims, wherein the suction nozzle (20) surrounds the feed nozzle (10) in a ring shape.

4. Method according to claim 1 or 2, wherein the feed nozzle (10) is arranged at a first angle (a10) relative to the surface (1a) of the fibre composite component (1).

5. Method according to claim 4, wherein the suction nozzle (20) is arranged at a second angle (a20) relative to the surface (1a) of the fibre composite component (1) and opposite the feed nozzle (10).

6. Method according to one of the preceding claims, wherein the transport fluid is transported to the surface (1a) at a pressure (P1) between 0.25 bar and 8 bar above ambient pressure (P0).

7. Method according to one of the preceding claims, wherein glass granulate, corundum granulate or plastic granulate is used as the removal agent (2).

8. Method according to one of the preceding claims, wherein the fibre composite component (1) is formed by a structural component (100) of an aircraft, in particular by a stringer.

## Revendications

1. Procédé de traitement d'une surface (1a) d'un élément composite renforcé par des fibres (1), comprenant les étapes suivantes :
l'abrasion de la surface (1a) de l'élément composite renforcé par des fibres (1) par projection d'un agent d'abrasion (2) transporté par un fluide de transport gazeux sur la surface (1a) de l'élément composite renforcé par des fibres (1) au moyen d'une buse d'alimentation (10), **caractérisé en ce que** le projection par la buse d'alimentation (10) s'effectue dans un espace de travail (35) qui est formé par une cloche (30) placée sur la surface (1a) de l'élément composite renforcé par des fibres (1), dans lequel la cloche (30) présentant une marge d'appui (31) qui est tourné vers la surface (1a) de l'élément composite renforcé par des fibres (1), dans lequel un dispositif d'étanchéité (40) étant disposé sur la marge d'appui (31) pour rendre étanche l'espace de travail (35) par rapport à la surface (1a) de l'élément composite renforcé par des fibres (1), et dans lequel l'espace de travail (35) étant rendu étanche par rapport à une surface arrière (1b) de l'élément composite renforcé par des fibres (1) lors de l'enlèvement d'une zone de marge (1A) de la surface (1a) de l'élément composite renforcé par des fibres (1) ; et que
une aspiration du agent d'abrasion (2) et de la matière (3) enlevée par le agent d'abrasion (2) hors de l'espace de travail (35) est effectuée au moyen d'une buse d'aspiration (20) disposée dans la zone de la buse d'alimentation (10) ;
dans lequel la zone de marge (1A) de la surface (1a) s'étend le long d'un bord (4) de l'élément composite renforcé par des fibres (1), et dans lequel le dispositif d'étanchéité (40) entoure le bord (4) de l'élément composite renforcé par des fibres (1) et est ainsi en contact avec la surface (1a) et la surface arrière (1b) de l'élément composite renforcé par des fibres (1).

2. Procédé selon la revendication 1, dans lequel l'élément composite renforcé par des fibres (1) s'étend dans une direction longitudinale (L), dans lequel l'enlèvement s'effectuant par bandes le long de la direction longitudinale (L) en partant d'un bord latéral (4) de l'élément composite renforcé par des fibres (1).

3. Procédé selon l'une des revendications précédentes, dans lequel la buse d'aspiration (20) entoure annulairement la buse d'alimentation (10).

4. Procédé selon la revendication 1 ou 2, dans lequel la buse d'alimentation (10) est disposée selon un premier angle (a10) par rapport à la surface (1a) de l'élément composite renforcé par des fibres (1).

5. Procédé selon la revendication 4, dans lequel la buse d'aspiration (20) est disposée selon un deuxième angle (a20) par rapport à la surface (1a) de l'élément composite renforcé par des fibres (1) et en face de la buse d'alimentation (10).

6. Procédé selon l'une des revendications précédentes, dans lequel le fluide de transport est transporté vers la surface (1a) à une pression (P1) comprise entre 0,25 bar et 8 bars au-dessus de la pression ambiante (PO).

7. Procédé selon l'une des revendications précédentes, dans lequel on utilise comme agent d'abrasion (2) des granulés de verre, des granulés de corindon ou des granulés de matière plastique.

8. Procédé selon l'une des revendications précédentes, dans lequel l'élément composite renforcé par des fibres (1) est formé par un élément de structure (100) d'un aéronef, en particulier par un stringer.
